Europäisches Patentamt

European Patent Office

Office européen des brevets

(11) Veröffentlichungsnummer: **0 254 074**
**A1**

(12) **EUROPÄISCHE PATENTANMELDUNG**

(21) Anmeldenummer: 87109241.7

(22) Anmeldetag: 26.06.87

(51) Int. Cl.⁴: **C22C 5/04** , H01H 1/02

(30) Priorität: 17.07.86 DE 3624149

(43) Veröffentlichungstag der Anmeldung:
27.01.88 Patentblatt 88/04

(84) Benannte Vertragsstaaten:
AT BE CH DE ES FR GB GR IT LI LU NL

(71) Anmelder: Degussa Aktiengesellschaft
Weissfrauenstrasse 9
D-6000 Frankfurt am Main 1(DE)

(72) Erfinder: Berchtold, Lorenz, Dr.
Grünaustrasse 3
D-6450 Hanau 9(DE)
Erfinder: Konietzka, Uwe, Dipl.-Ing.
Südring 3
D-6458 Rodenbach 1(DE)

(54) **Werkstoff für elektrische Steckkontakte.**

(57) Wenig zur Fremdschichtenbildung neigende, einen hohen Verschleißwiderstand aufweisende und dem Träger aus einer Kupferlegierung angepasste Rekristallisationstemperatur besitzende Werkstoffe für Steckkontakte bestehen aus Palladium mit 4 bis 20 Gew. % Wismut und/oder Antimon und 0 bis 2 Gew. % Iridium und/oder Osmium und/oder Ruthenium und/oder Rhodium.

EP 0 254 074 A1

## Werkstoff für elektrische Steckkontakte

Die Erfindung betrifft einen Werkstoff für elektrische Steckkontakte aus einer Palladiumlegierung.

Steckkontakte, besonders wenn sie für kleinste Spannungen und Ströme in modernen elektronischen Geräten eingesetzt werden sollen, bestehen meist aus Trägern aus Unedelmetallen, die mit Edelmetallen oder Edelmetallegierungen beschichtet sind. An die edlen Auflagewerkstoffe werden dabei drei wesentliche technische Anforderungen gestellt. Zum Ersten sollen sie möglichst beständig gegen aggressive Atmosphären sein, so daß bei ihrem Einsatz ein niedriger und stabiler Kontaktwiderstand erzielt wird. Zum Zweiten sollen sie in der Reibpaarung mit dem Kontaktgegenstück einem möglichst geringen Verschleiß unterliegen und einen geringen Reibungskoeffizienten aufweisen, so daß keine Durchrieb der Auflageschicht erfolgt und die Kontaktbetätigungskräfte niedrig sein können. Zum Dritten ist für ein Plattieren der Auflagewerkstoffe eine Anpassung der mechanischen Eigenschaften an die Trägerwerkstoffe erforderlich. Beim üblicherweise angewendeten mechanischen Walzplattieren ist insbesondere eine etwa übereinstimmende Rekristallisierungstemperatur von Auflage und Träger zur Herstellung eines hochwertigen Werkstoffverbundes wichtig.

Diese Anforderungen betreffen weitgehend gegenläufige Eigenschaften. So sind die heute gebräuchlichen Werkstoffe für Steckkontakte entweder sehr korrosionsbeständig oder sehr verschleißbeständig, besitzen aber nicht gleichzeitig beide Eigenschaften. Andererseits zeigen Werkstoffe mit verschleißhemmenden, härtenden Zusätzen eine Erhöhung der Rekristallisationstemperatur. Dies gilt ganz allgemein für Gold-und Palladiumlegierungen.

Eine weitere Anforderung an die Werkstoffe für elektrische Steckkontakte betrifft ihre Wirtschaftlichkeit. Man strebt daher ganz allgemein eine Verminderung des Goldgehaltes in entsprechenden Legierungen an.

Als Werkstoffe für Steckkontakte sind daher eine Reihe von goldfreien Palladiumlegierungen bekannt, die neben Palladium beispielsweise noch 40 Gew. % Silber, oder 26 % Silber und 2 % Nickel, oder 40 % Silber und 15 % Kupfer enthalten können (A. Keil, "Elektrische Kontakte und ihre Werkstoffe", Seite 167, Springer Verlag, 1984). In den DE-PSen 961762 und 10 22 385 sind Werkstoffe beschrieben, die neben Palladium mehrere Prozente eines oder mehrerer der Metalle Blei, Zinn, Germanium, Indium, Gallium, Thallium und gegebenenfalls Kupfer, Silber, Nickel und/oder Kobalt enthalten. Für Schleifkontakte mit hoher Verschleißbeanspruchung werden auch Palladium-Wolfram-bzw. Palladium-Kobalt-Wolfram-Werkstoffe verwendet.

Diese bekannten Werkstoffe haben jedoch den Nachteil, daß entweder die Rekristallisationstemperatur sehr hoch liegt oder sie sehr ausgeprägt zur Fremdschichtenbildung neigen, die die Kontaktgebung stark beeinträchtigt.

Es war daher Aufgabe der vorliegenden Erfindung, einen Werkstoff für elektrische Steckkontakte aus einer Palladiumlegierung zu finden, die goldfrei ist, einen hohen Verschleißwiderstand aufweist, nur minimal zur Fremdschichtenbildung neigt und eine dem Trägerwerkstoff angepasste Rekristallisationstemperatur aufweist.

Diese Aufgabe wird erfindungsgemäß dadurch gelöst, daß die Legierung 4 bis 20 Gew. % Wismut und/oder Antimon und 0 bis 2 Gew. % Iridium und/oder Osmium und/oder Ruthenium und/oder Rhodium, Rest Palladium enthält.

Vorzugsweise enthält die Legierung 8 bis 15 Gew. % Wismut und/oder Antimon und 0 bis 0,5 Gew. % Iridium und/oder Osmium und/oder Ruthenium und/oder Rhodium, Rest Palladium.

Diese Legierungen seind sehr verschleißfest und überraschenderweise auch sehr korrosionsbeständig, d.h. sie neigen nicht zur Fremdschichtenbildung. Außerdem besitzen sie eine Rekristallisationstemperatur von nur ca. 650°C.Sie lassen sich gut zu einer dünnen Kontaktauflage verarbeiten, die auf einen Träger, vorzugsweise Kupferlegierung, gegebenenfalls mit einer Nickelzwischenschicht aufgebracht werden kann.

Die folgende Tabelle zeigt einige erfindungsgemäße Legierungen (1 bis 4) und zum Vergleich einige bekannte Legierungen (5 bis 9). Die Zunahme des Kontaktwiderstandes (84 %-Wert der Summenhäufigkeit) wurde an Blechproben vor und nach Auslagerung in einem Dreikomponenten-Schadgas bei 30°C durch Messung mit einem Goldniet als Gegenkörper ermittelt.

Das Schadgas bestand aus Luft mit 200 ppb $NO_2$, 100 ppb $H_2S$ und 10 ppb $Cl_2$ bei 75 % relativer Feuchte. Die Kontaktkraft bei der Messung betrug 0,1 N. Das Reibungsverhalten wurde in Tribometermessungen als Paarung Rundniet gegen Blech bei 0,75 N Auflagekraft ermittelt.

Tabelle

| Legierung | Zusammensetzung Gew. % | | | | Zunahme des Kontaktwiderstandes nach 8 Tagen in Schadgas Milliohm | Reibungs- verhalten - | Rekristalli- sationstemperatur $^{o}$C bei t=5 min |
|---|---|---|---|---|---|---|---|
| | Palla- dium | Silber | Wismut und/oder Antimon | andere | | | |
| 1 | 89,9 | - | 10 Bi | 0,1 Ru | 18 | sehr gut | 650$^{o}$ |
| 2 | 87,9 | - | 12 Sb | 0,1 Ir | 19 | hervorragend | 650$^{o}$ |
| 3 | 95,5 | - | 4,5 Sb | - | 16 | gut | 620$^{o}$ |
| 4 | 80 | - | 20 Bi | - | 35 | hervorragend | 700$^{o}$ |
| 5 | 58 | 39 | - | 3 Ni | 30 | mäßig | 900$^{o}$ |
| 6 | 56 | 36 | - | 8 Sn | 40 | gut | 900$^{o}$ |
| 7 | 55 | 30 | - | 15 Cu | 300 | Sehr gut | - |
| 8 | 85 | - | - | 15 Ni | 65 | gut | 750$^{o}$ |
| 9 | 85 | - | - | 15 Pb | 100 | schlecht | 750$^{o}$ |

0 254 074

**Ansprüche**

1. Werkstoff für elektrische Steckkontakte aus einer Palladiumlegierung,
dadurch gekennzeichnet,
daß sie 4 bis 20 Gew. % Wismut und/oder Antimon und 0 bis 2 Gew. % Iridium und/oder Osmium und/oder Ruthenium und/oder Rhodium, Rest Palladium enthält.

2. Werkstoff nach Anspruch 1,
dadurch gekennzeichnet,
daß die Legierung 8 bis 15 Gew. % Wismut und/oder Antimon und 0 bis 0,5 Gew. % Iridium und/oder Osmium und/oder Ruthenium und/oder Rhodium enthält.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE-A-2 206 397 (FA. C. HAAS) * Ansprüche 1,3; Seite 5, Tabelle, Legierung Nr. 4 * | 1 | C 22 C 5/04 H 01 H 1/02 |
| | --- | | |
| A | CHEMICAL ABSTRACTS, Band 101, Nr. 20, 12. November 1984, Seite 289, Zusammenfassung Nr. 176023c, Columbus, Ohio, US; & JP-A-59 113 141 (TANAKA NOBLE METAL INDUSTRIAL CO., LTD) 29-06-1984 * Abstract * | 1 | |
| | --- | | |
| A | CHEMICAL ABSTRACTS, Band 102, Nr. 20, 20. Mai 1985, Seite 274, Zusammenfassung Nr. 171053y, Columbus, Ohio, US; & JP-A-59 229 438 (TANAKA NOBLE METAL INDUSTRIAL CO., LTD) 22-12-1984 * Abstract * | 1 | |
| | ----- | | |

**RECHERCHIERTE SACHGEBIETE (Int. Cl.4)**

C 22 C 5/04
H 01 H 1/02

Der vorliegende Recherchenbericht wurde für alle Patentansprüche erstellt.

| Recherchenort | Abschlußdatum der Recherche | Prüfer |
|---|---|---|
| DEN HAAG | 09-11-1987 | LIPPENS M.H. |

KATEGORIE DER GENANNTEN DOKUMENTE
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82